# EUROPEAN PATENT APPLICATION

(11) **EP 1 862 080 A1**
(43) Date of publication of application: **05.12.2007**
(21) Application number: 06011212.5
(22) Date of filing: 31.05.2006
(51) Int. Cl.: A23K 1/00, A23K 1/17, A23K 1/16, A23K 1/18, A23L 1/30

(54) **Protease-resistant bacteriocins produced by lactic acid bacteria and their use in livestock**

(71) Applicant: Ajinomoto Co., Inc., Tokyo 104-8315 (JP)
(72) Inventor: Uehara, Akinori, Kawasaki-shi Kanagawa 210-8681 (JP); Toride, Yasuhiko, Kawasaki-shi Kanagawa 210-8681 (JP); Morikoshi, Toshimichi, Kuroiso-shi Tochigi 325-0103 (JP); Hayashi, Satoshi, Kuroiso-shi Tochigi 325-0103 (JP)
(74) Representative: HOFFMANN EITLE

(57) **Abstract**

An antibiotic comprising a protease-resistant bacteriocin derived from a lactic acid bacterium, and compositions thereof, are disclosed. A feed composition for livestock comprising the antibiotic comprising a protease-resistant bacteriocin derived from a tactic acid bacterium is also disclosed. A method for preventing the growth of human food poisoning-causing bacteria in the stomach and/or intestines of livestock comprising administering the feed composition comprising a protease-resistant bacteriocin derived from a lactic acid bacterium to livestock is disclosed.

## Description

### BACKGROUND OF THE INVENTION

Field of the invention

In recent years, human food poisoning caused by bacteria belonging to the genus Salmonella, Campylobacter, and the like has increased sharply. Contamination by these bacteria has also spread to the chicken and pig farming industries. As a countermeasure, in Japan, reverse disinfectants and the like have been employed to disinfect chicken coops. Overseas, vaccines have been employed. However, neither of these methods has been able to prevent infection of humans via food poisoning by these bacteria, which remain present in the intestines of livestock.

Antibiotics against salmonella are commercially available in the form of sugars, organic acids, antibiotics, and compound formulations. The infection mechanism of Salmonella has also been studied. Salmonella have type I fimbriae, which are known to bind to mannose-analogous receptors on the cellular surface of the epithelium mucosae in the intestines of livestock, resulting in adherance and infection. In particular, since sugars such as mannose are natural substances, they are highly safe and are anticipated to be highly effective as antibiotics by acting directly on the Salmonella bacteria (Characteristics and Usefulness of Mannan Oligosaccharides, "Friend of the Chicken Rancher", June issue, p. 14-18 (1996), JP10-215790A, WO99/08544, JP2001-238608A)). However, mannose is degraded by the enterobacterium present in livestock, and thus has no effect unless it is administered in large amounts. The development of an antibiotic for mannose-degrading bacteria is needed (On the inhibitory effect on Salmonella infection of oligosaccharides in chickens, "Poultry Diseases", Vol. 31, p. 113-117 (1995).).

Furthermore, nisin, an antibiotic substance produced by lactic acid bacteria, has also been investigated for use against Salmonella and Campylobacter bacteria. Nisin has a broad antibiotic spectrum against gram-positive bacteria, but has low antibiotic properties against gram-negative bacteria (Can. J. Microbiol., Vol. 47, p. 322-331 (2001). ). Thus, there are examples of nisin being used as an antibiotic in combination with chelating agents (Journal of Food Protection, Vol. 58 (9), p. 977-93 (1995)), TSP (Journal of Food Protection, Vol. 61 (7), p. 839-844 (1998)), lysozyme, and organic acids (WO03/005963). However, in the intestines of livestock harboring Salmonella, nisin is degraded by digestive enzymes and thus does not have lasting antibiotic activity. Therefore, there is need in the art to develop an antibiotic that is not degraded.

### SUMMARY OF THE INVENTION

Accordingly, objects of the present invention include providing an antibiotic for livestock that is effective at preventing the growth of bacteria responsible for food poisoning in humans in the digestive tract of the livestock, and by extension, a method for preventing the growth of bacteria which causes human food poisoning in the stomach and/or intestines of livestock by the administration to livestock of a feed composition containing such an antibiotic.

It has been found that the antibiotic as described above is a protease-resistant bacteriocin, and can be administered to livestock. This bacteriocin is isolated from lactic acid bacteria which are typically present in the stomach and intestinal juices of livestock. In this way, it is possible to prevent the growthof bacteria responsible for food poisoning in the digestive tract of the livestock. The present invention was devised on the basis of this discovery.

It is an object of the present invention to provide an antibiotic comprising a protease-resistant bacteriocin isolated from a lactic acid bacterium.

It is a further object of the present invention to provide a composition comprising the antibiotic as described above and suitable excipients.

It is a further object of the present invention to provide the composition as described above, wherein said composition is formulated for administration to livestock.

It is a further object of the present invention to provide the composition as described above, wherein said lactic acid bacterium belongs to a genus selected from the group consisting of Lactobacillus, Weissella, Pediococcus, Leuconostoc, and combinations thereof.

It is a further object of the present invention to provide the composition as described above, wherein said lactic acid bacterium is selected from the group consisting of *Lactobacillus plantarum, Lactobacillus salivarius, Lactobacillus pentosus, Weissella sp.* FERM BP-10474, *Weissella cibaria, Weissella confusa, Weissella hellenica, Weissella kandleri, Weissella minor, Weissella paramesenteroides, Weissella thailandensis,Pediococcus pentosaceus, Leuconostoc citreum, Leuconostoc pseudomesenteroides, Leuconostoc argentinum, Leuconostoc carnosum, Leuconostoc mesenteroides.*

It is a further object of the present invention to provide a feed composition comprising the antibiotic as described above.

It is a further object of the present invention to provide a method for preventing the growth ofthc bacteria responsible for food poisoning in humans in the stomach and/or intestines of livestock comprising administering to the livestock the feed composition as described above.

It is a further object of the present invention to provide the method as described above, wherein said bacteria belong to a genus selected from the group consisting of Salmonella, Campylobacter, Listeria, *Escherichia coli,* Welsh, and combinations thereof.

### BRIEF DESCRIPTION OF THE DRAWINGS

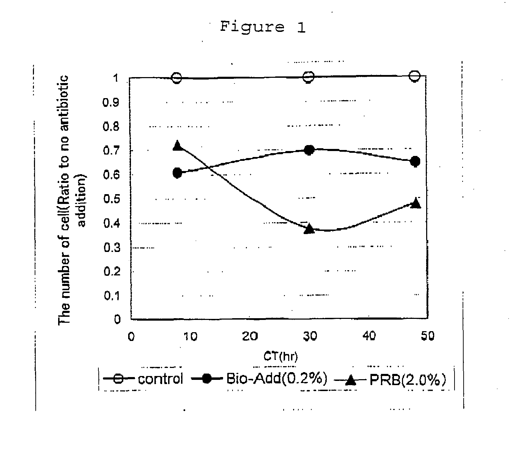

Fig. 1 shows the profiles of the bactericidal effects on Salmonella of various antibiotics used in feed.

### DETAILED DESCRIPTION OF THE INVENTION

The present invention is described in detail below.

The antibiotic of the present invention contains a protease-resistant bacteriocin derived from lactic acid bacteria, and can be formulated as a composition for administration to livestock, or formulated into the feed for said livestock.

The "livestock" of the present invention include pigs, as well as poultry, such as chickens, quail, guinca hens, domestic goose, mallards, turkeys, black-meat chickens, and the like.

Generally, "bacteriocin" refers to an antibiotic protein substance (Klacnhammer, T.R., Biochemie 60(3): 337-349 (1988)). However, the "protease-resistant bacteriocin" of the present invention refers to bacteriocins that are not degraded by protein degrading enzymes (proteases), in contrast to conventional bacteriocins such as nisin. The bacteriocins of the present invention are not degraded by proteases such as digestive enzymes present in the stomach and intestines of livestock. Examples of such proteases are pepsin (EC3.4.23.1, EC3.4.23.2, EC34.4.23.3) and trypsin (EC3.4.21.4).

In addition to being resistant to proteases such as digestive enzymes, the protease-resistant bacteriocin that is employed in the present invention also is resistant to, and is not degraded by, proteases derived from the genus Aspergillus, which are employed in brewing and fermentation, as well as proteases derived from meats, which are employed in food processing. Examples of these proteases are "Umamizyme G" (Amano Enzyme, Inc.), a protease of the genus Aspergillus that is employed in brewing and fermentation, and cathepsin, a protease from meat that is employed in food processing.

The protease-resistant bacteriocin of the present invention is produced by lactic acid bacteria and is highly safe. This protease-resistant bacteriocin has a bacteriostatic and bactericidal action on the bacteria which are responsible for human food poisoning, and are typically present in the stomachs and intestines of livestock. Thus, when this protease-resistant bacteriocin, or a culture solution or culture supernatant containing it, is administered as is or is formulated into a feed composition, the bacteriocin is not degraded by protease. Therefore, the bacteriocin is active and suppresses the growth of bacteria which are responsible for human food poisoning, and are present in the stomach or intestines. The infection of such bacteria from the intestines during the handling of livestock in meat processing is thereby prevented. Furthermore, this bacteriocin is derived from lactic acid bacteria, and is safer than conventional chemically synthesized compounds, even when consumed by the livestock in large quantities. It is thus also desirable from the aspect of the health of the livestock.

In the present invention, the term "bacteria responsible for human food poisoning" means bacteria that are constantly present in the stomach and intestines of livestock, and that cause food poisoning of humans when the meat and/or eggs is consumed or handled by humans. Specifically, the "bacteria responsible for human food poisoning" include bacteria of the genera Salmonella, Campylobacter, Listeria, Escherichia, Welsh, Yersinia (Yersinia enterocolitica), *Pseudomonas aeruginosa, Staphylococcus aureus,* and Clostridium. Particularly, the "bacteria responsible for human food poisoning" are bacteria of the genus Salmonella and Campylobacter.

Bacteria of the genus Salmonella are constantly present in the intestines of livestock, such as pigs and domestic fowl such as chickens. In the processing of livestock, the bacteria adhere to the meat and eggs. When a piece of meat or an egg to which this bacterium has adhered is eaten without having been adequately heated, the result is human food poisoning, which results in severe gastroenteritis, nausea, vomiting, and the like. Bacteria of the genus Campylobacter are constantly present in the intestines of fowl such as chickens, and can contaminate chicken meat during meat processing, and cause human food poisoning, resulting in diarrhea, abdominal pain, fever, nausea, vomiting, and the like.

The protease-resistant bacteriocin of the present invention can be efficiently manufactured by culturing lactic acid bacteria according to the example below.

The lactic acid bacteria that produce the protease-resistant bacteriocin of the present invention have been isolated from fermented foods, and the like. Any lactic acid bacteria with antibiotic activity that can be detected by the screening method described below may be employed, even when separated from something other than fermented foods, or the like.

The lactic acid bacteria employed in the present invention preferably belong to the genus Lactobacillus, Weissella, Pediococcus, or Leuconostoc. In particular, preferable examples of lactic acid bacteria belonging to the genus Lactobacillus are:
*Lactobacillus plantarum, Lactobacillus salivarius,* and *Lactobacillus pentosus.* Preferable examples belonging to the genus Weissella are: *Weissella sp.* FERM BP-10474, *Weissella cibaria, Weissella confusa, Weissella hellenica, Weissella kandleri, Weissella minor, Weissella paramesenteroides,* and *Weissella thailandensis.* A preferable example belonging to the genus Pediococcus is *Pediococcus pentosaceus.* Preferable examples belonging to the genus Leuconostoc are: *Leuconostoc citreum, Leuconostoc pseudomesenteroides, Leuconostoc argentinum, Leuconostoc carnosum,* and *Leuconostoc mesenteroides.*

Of the above lactic acid bacteria, the following are particularly preferable for use in the present invention: *Lactobacillus plantarum* strain JCM1149, *Lactobacillus salivarius* strain JCM1231, *Lactobacillus pentosus* strain IAM1558, *Pediococcus pentosaceus* strains JCM5885 and JCM5890, *Weissella sp.* FERM BP-10474, *Weissella cibaria* strain JCM12495, *Weissella confusa* strain JCM 1093, *Weissella hellenica* strain JCM10103, *Weissella kandleri* strain JCM5817, *Weissella minor* strain JCM1168, *Weissella paramesenteroides* strain JCM9890, *Weissella thailandensis* strain JCM 10694, *Leuconostoc citreum* strain JCM9698, *Leuconostoc pseudomesenteroides* strain JCM11045, *Leuconostoc argentinum* strain JCM11052, *Leuconostoc carnosum* strain JCM9695, and *Leuconostoc mesenteroides* strain JCM6124. The bacterial strains referenced by "JCM" depository numbers are stored at the "Japan Collection of Microorganisms" of the Riken Bioresource Center (an Independent Administrative Institution), 2-1 Hirozawa, Wako, Saitama Prefecture, Japan. *Weissella sp.* FERMBP-10474 was deposited as depository number FERM BP-10474 at the "International Patent Organism Depositary" of the National Institute of Advanced Industrial Science and Technology (an Independent Administrative Institution), Central 6, 1-1-1 Tsukuba East, Ibaraki Prefecture, Japan, on October 31, 2003.

Whether or not a given lactic acid bacterium produces the protease resistant bacteriocin (sometimes abbreviated as "PRB") of the present invention can be determined by the following method, for example. That is, in the following method, growth inhibition zones of an indicator strain are formed when PRB is produced in a culture of lactic acid bacteria.

(1) A lactic acid bacterium culture solution is prepared by a typical culture method for lactic acid bacteria (or by a culture method in which lactic acid bacterium of present invention is separated). The culture solution of the lactic acid bacterium is adjusted to pH 5.5 to 6.0 with NaOH, separated by centrifugation at 12,000 rpm x 10 min, and filtered through 0.45 µm cellulose acetate with a Disposable Syringe Filter Unit (ADVANTEC "Dismic-25cs) to obtain a sample. When antibiotic activity is low, fourfold concentration is conducted under reduced pressure at room temperature. When necessary, tenfold concentration may be conducted.

(2) *Listeria innocua* ATCC33090T, *Bacillus circulans* JCM2504T, *Bacillus coagulans* JCM2257, *Micrococcus luteus* IFO1208*, Bacillus subtilis* JCM1465T, *Bacillus subtilis* IAM1381, *Lactococcus lactis* sub sp. Lactis ATCC19435, *Enterococcus faecium* JCM5804T, *Enterococcus* faecalis JCM5803T, *Pediococcus pentasaceus* JCM5885, *Lactobacillus plantarum* ATCC14917T, and *Lactobacillus sakei* JCM 1157T are employed as the indicator strain. Antibiotic activity is measured by the spot-on-lawn method, described further below, or the viable bacteria count method, and the indicator strainn which exhibits the strongest antibiotic activity is selected.

(3) Aspergillus-derived protease ("Umamizyme G" or the like made by Amano Enzyme, Inc.) is employed as the enzyme.

(4) A 10 to 100 unit/mL quantity of the enzyme described in (3) is added to the sample of (1) and a reaction is conducted by maintaining the mixture at 30°C for one or more hours.

(5) The indicator strain that exhibits the greatest antibiotic activity in (2) is plated, 0.01 mL of the sample which has been treated with the enzyme of (4) is added dropwise to a medium in which the indicator strain will proliferate, such as MRS, and culturing is conducted for 20 to 24 hours at the optimum temperature for growth of the indicator strain (37°C for *Listeria innocua, Bacillus coagulans, Enterococcus faecium,* and *Pediococcus pentosaceus,* 30°C for the others). Subsequently, growth inhibition zones of the indicator strain are confirmed.

The composition of the present invention, characterized by containing the protease-resistant bacteriocin, may include the lactic acid bacterium culture solution which produces the protease-resistant bacteriocin as is, and/or may include the dried bacterial product of such a culture solution, or may include the culture supernatant. Bacteriocin obtained by the separation and purification of any of these may also be included in the composition of the present invention. A suitable excipient or the like, as described further below, may also be added to the composition of the present invention. In brief, an agent exhibiting PRB activity derived from lactic acid bacteria suffices as a component of the composition of the present invention. In passing, the activity of protease-resistant bacteriocin produced from the lactic acid bacteria is present intracellularly, and is secreted extracellularly.

Protease-resistant bacteriocin produced from a culture solution of lactic acid bacteria can be separated and purified as necessary according to the methods commonly employed in this field. Specifically, the bacteriocin can be produced by obtaining a fraction which has the protease-resistant bacteriocin activity and conducting ammonium sulfate precipitation, column chromatography, ethanol precipitation, or the like. The lactic acid bacterium employed in the present invention can be cultured using medium components suited to the bacterial strain employed and production of protease-resistant bacteriocin. The use of a culture solution that has been suitably concentrated permits more efficient further processing.

Lactic acid bacteria can be cultured by typical methods, such as those shown below.

A carbon source may be present in the medium employed for the present invention, and may include whey, starch sugar solution, or food-use glucose. A nitrogen source may also be present in the medium employed for the present invention, and may include whey protein concentrate hydrolysis products, corn pcptides, soy peptides, commercial flavozonesolution materials, low-end distilled spirit lees, or food-use enzyme extracts. Additionally, various organic and inorganic products, and items containing such products, that are required for the growth of lactic acid bacteria and enzyme production, such as phosphates, magnesium salt, calcium salt, manganese salt, other salts, vitamins, and yeast extract may be suitably added to the medium. The culturing temperature and period may be set according to those typical in common lactic acid bacteria culturing methods; for example, in a stationary culture, the temperature and time period for culture may be 30 to 37°C and 12 to 36 hours, respectively.

In the present invention, the antibiotic effect on the bacteria responsible for human food poisoning in the stomach and intestines of livestock can be confirmed by inhibition of the growth of indicator strains and the food poisoning-causing bacteria in an artificial stomach juice treatment solution containing trypsin, pepsin, and the like, or may be confirmed by *in vivo* oral administration to real animals to examine whether or not there is a reduction in the bacteria responsible for human food poisoning in the stomach and intestines.

The antibiotic and compositions of the present invention may be employed in various forms. Examples are powders, granules, and tablets. Excipients, fillers, and the like may be suitably added as needed. When a lactic acid bacterium culture solution is employed as the composition of the present invention, the proportion of the lactic acid bacterium of the present invention in the composition may be determined relative to the quantity of bacteria responsible for human food poisoning in the stomach and intestines of the livestock, the season, and the like. When the protease-resistant bacteriocin is of high purity or the specific activity is high, a small quantity is administered, and when the medium itself is being administered or the specific activity is low, a high ratio is administered.

The time of administration of the antibiotic or composition of the present invention is not specifically limited so long as the antibiotic effect of the present invention is exhibited. Administration is possible at any time. However, feeding is desirable prior to shipment of the livestock or domestic fowl for meat processing. Blending or formulating the antibiotic into the livestocks' feed permits particularly efficient administration.

The dose of the antibiotic or composition of the present invention that is administered is not specifically limited so long as the antibiotic effect of the present invention is exhibited. For example, the dose may be suitably adjusted based on the lactic acid bacterium employed and the animal to which it is being administered so that the effect of the present invention is exhibited.

The feed composition of the present invention contains the above-described antibiotic or composition of the present invention. The ratio of the antibiotic or composition in the feed composition is normally 0.1 to 10 weight percent, preferably 2 to 10 weight percent. The feed composition is not specifically limited; a commercial product may be employed as is, or, in addition to corn, wheat, barley, soy lees, and other vegetable materials, meat bone meal (MBM), chicken meal, fish paste, and other animal materials may be suitably added to a commercial product as necessary. Furthermore, carbohydrates, fat, protein, inorganic substances (such as calcium, magnesium, sodium, and phosphorus), vitamins (such as vitamins A, B1, B2, and D), and various other nutrients may be added as necessary.

The present invention is specifically described below through the following non-limiting Examples.

<Reference Example 1>

The method of screening lactic acid bacteria that produce protease-resistant bacteriocin will be described based on the example of separation from the fermented food matsoon.

To separate the lactic acid bacteria, 0.5 percent of fermented milk matsoon (a type of fermented food) samples were added to a liquid media which permits the growth of lactic acid bacteria, such as MRS medium (Table 1 below) and M17 medium (Table 2 below. The samples were cultured at 30 to 37°C (preculturing). Culturing was conducted for one, five, or ten days, respectively. Upon completion of culturing, the bacteria were cultured on the above-described agar (1.2 percent) medium containing 0.5 percent calcium carbonate and the lactic acid bacteria colonies that grew were collected.

**Table 1**

| MRS medium composition (Merck) | |
|---|---|
| Peptone | 10.0 g/L |
| Lab-Lemco' Powder | 8.0 g/L |
| Yeast extract | 4.0 g/L |
| Glucose | 20.0 g/L |
| Tween 80 | 1.0 g/L |
| Monopotassium dihydrogen phosphate (KH₂PO₄) | 2.0 g/L |
| Sodium acetate | 5.0 g/L |
| Ammonium citrate | 2.0 g/L |
| Magnesium sulfate 7 hydrate(MgSO₄· 7H₂O) | 0.20 g/L |

**Table 2**

| M17 medium composition (Merck) | |
|---|---|
| Soymeal derived peptone | 5.0 g/L |
| Meat derived peptone | 2.5 g/L |
| Casein derived peptone | 2.5 g/L |
| Yeast extract | 2.5 g/L |
| Meat extract | 5.0 g/L |
| D(+) lactose | 5.0 g/L |
| Ascorbic acid | 0.5 g/L |
| β-glycerophosphoric acid sodium | 19.0 g/L, |
| Magnesium sulfate | 0.25 g/L |

The lactic acid bacteria that were collected were similarly cultured in the liquid medium and under the culture conditions as set forth above (the original culture). Next, the lactic acid bacteria were inoculated onto MRS agar medium plates to which prefiltered "Umamizymc G" (Amano Enzyme, Inc.), a protease derived from *Aspergillus oryzae,* had been added, and cultured for 24 hours at 30°C. These plates were then layered with Lactobacilli AOAC medium (Table 3 below), mixed with indicator strains, and cultured for 24 hours at 30°C, which resulted in growth inhibition zones of indicator strains to form.

**Table 3: Lactobacilli AOAC medium composition**

| Lactobacilli AOAC medium composition (Difco) | |
|---|---|
| Peptonized milk | 15.0 g/L |
| Yeast extract | 5.0 g/L |
| Dextrose | 10.0 g/L |
| Tomato juice | 5.00 g/L |
| Monopotassium dihydrogen phosphateKH₂PO₄ | 2.0 g/L |
| Polysorbate 80 | 1.0 g/L |

Other methods can be employed to add the protease, such as 1) mixing the protease with the indicator strain, 2) coating the protease on agar medium, 3) adding the protease in the course of cultivating lactic acid bacteria colonies (in this process, the protease can be added at the start of the culture, during the culture, or once the culture is complete), and 4) after cultivating lactic acid bacteria colonies, eliminating the bacterial mass or killing the bacteria in the culture solution, adding to plates containing the indicator strains a suitable quantity of sample containing protease, and confirming the formation of the inhibition zones. Methods 1) to 4) above are given by way of example and are not limitations. Nor is the protease limited to "Umamizyme G".

Next, protease-resistant bacteriocin activity was evaluated by antibiotic spectral analysis. The antibiotic spectrum was examined by the spot-on-lawn method, in which the culture solution supernatant of a lactic acid bacteria exhibiting antibiotic activity was sequentially diluted and spotted on an antibiotic activity plate, described further below.

First, antibiotic activity samples were prepared. The culture solution of a strain having antibiotic activity collected by the above-described method was centrifugally separated for 10 min at 10,000 rpm, yielding a culture supernatant. The culture supernatant was then passed through a filter to obtain a sterile sample. The sample was then diluted in twofold steps to prepare a 2¹¹ diluted solution. When the activity was low, as needed, reduced pressure concentration was conducted in twofold steps at room temperature to prepare a 2⁻³ diluted solution.

Next, the mixed indicator strain was cultured on an antibiotic activity plate. The indicator strains in Table 4 below were cultured on TSBYE medium (Table 5 below), TSB medium (Table 6 below), or MRS medium. The genera Bacillus and Micrococcus were cultured with shaking, while other strains were cultured in a stationary manner. *Bacillus coagulans, Listeria, Pediococcus,* and *Enterococcus* were cultured at 37°C, the other strains at 30°C.

**Table 4**

| Strain | Medium/culture temperature (°C) | Culture method |
|---|---|---|
| *Bacillus coagulans* JCM2257 | TSBYE/37 | Shaking |
| *Bacillus subtilis* JCM1465T | TSBYE/30 | Shaking |
| *Bacillus subtilis* IAM1381 | TSBYE/30 | Shaking |
| *Bacillus circulans* JCM2504T | TSBYE/30 | Shaking |
| *Micrococcus luteus* IFO12708 | TSBYE/30 | Shaking |
| *Listera innocua* ATCC33090T | TSBYE/37 | Stationary |
| *Pediococcus pentosaceus* JCM5885 | MRS/37 | Stationary |
| *Enterococcus faecalis* JCM5803T | MRS/37 | Stationary |
| *Enterococcus faecium* JCM5804T | MRS/37 | Stationary |
| *Lactococcus lactis* subsp. lactis ATTCI9435 | MRS/30 | Stationary |
| *Lactobacillus plantarum* ATCC 14917T | MRS/30 | Stationary |
| *Lactobacillus sakei* subsp. sakei JCM1157T | MRS/30 | Stationary |
| *Leuconostoc mesenteroides* subsp. mesenteroides JCM6124T | MRS/30 | Stationary |
| *Lactobacillus kimchi* JCM10707T | MRS/30 | Stationary |

**Table 5: TSBYE Medium Composition**

| TSBYE medium composition | |
|---|---|
| TSB medium | 30.0 g/L |
| Yeast extract (Difco) | 6.0 g/L |

**Table 6: TSB Medium Composition**

| Bacto Tryptic Soy Broth (TSB) medium composition (Difco) | |
|---|---|
| Pancreatic digest of casein | 17.0 g/L |
| Enzymatic digest of soybean meal | 3.0 g/L |
| Dextrose | 2.5 g/L |
| Sodium chloride | 5.0 g/L |
| Monopotassium dihydrogen phosphate (KH₂PO₄) | 2.5 g/L |

Antibiotic activity plates were also prepared. A 10 mL quantity of MRS agar medium (1.2 percent agar) and 5 mL of Lactobacilli AOAC agar medium (1.2 percent agar) were separately sterilized by heating to 121°C for 15 min and maintained at 55°C. The sterilized MRS agar medium was dispersed on a sterile Petri dish and placed on a clean bench for one hour. Next, 50 µL of indicator strain culture solution was mixed with Lactobacilli AOAC agar medium maintained at 55°C and layered onto the MRS plate. The plate was placed on a clean bench with the plate cover off for 15 minutes to dry out the surface.

The antibiotically active samples prepared above were added dropwise in increments of 10 µL, the covers were put on the plate, and drying was conducted for about an hour. The plates were cultured for 20 hours at the culture temperatures of the various indicator strains and the formation of growth inhibiting zones was examined. Antibiotic activity (AU/mL) was defined as follows. Antibiotic activity (AU/mL) = (maximum dilution ratio at which growth inhibition zones formed) x 1,000/10.

The antibiotic spectra of the samples were analyzed in this manner, and were found to be resistant to protease and exhibit broad antibiotic spectra.

The bacteriological properties of lactic acid bacterium strain AJ 110263 selected by the above-described method were examined. This revealed homology of 98.22 percent (Table 7) with *Weissella confusa* strain ATCC 10881 by 16S ribosome DNA (rDNA) base sequence homology analysis (Altshul, S.F., Madden, T.F., Schaffer, A.A., Zhang, J., Zhang, Z., Miller, W., and Lipman, D.J. (1997), Gapped BLAST and PSl-BLAST: a new generation of protein database search programs. Nucleic Acids Res. 25:3389-3402). Type cultures on deposit at the ATCC were employed in homology evaluation.

**Table 7**

| | | |
|---|---|---|
| Homology of 16SrDNA | *Weissella confusa* | 98.22 % |
| | *Weissella viridescens* | 95.20 % |
| | *Weissella minor* | 92.54 % |
| | *Weissella kandleri* | 92.01 % |
| | *Weissella halotolerans* | 87.39 % |
| | *Weissella paramesenteroides* | 86.25 % |
| | *Lactobacillus mali* | 78.17 % |
| | *Pediococcus parvulus* | 77.58 % |

The basic characteristics (Table 8) of strain AJ110263 matched those of a lactic acid bacterium. Sugar fermentation (sugar consumption, see Table 9) was thought to be similar to fermentation by *Weissella confusa.* However, since L-arabinose fermentation differed and less than 100 percent homology with 16SrDNA was found, this new strain was found to be clearly different from known strains. This bacterium was named *Weissella sp.* AJ 110263. This bacterium was deposited at the International Patent Organism Depositary of the National Institute of Advanced Industrial Science and Technology (an Independent Administration Institution). The accession number is FERM BP-10474.

**Table 8: Basic characteristics of lactic acid bacterial strain AJ 110263**

| | |
|---|---|
| Cell form | Short bacillus (0.8 to 1.0 x 1.0 to 1.5 µm) |
| Gram staining | (+) |
| spore | (-) |
| Mobility | (-) |
| Colony form | Round |
| (medium: MRS medium) | Smooth around edge |
| (medium temp.: 30°C) | Slightly protruding shape |
| (culture period: 24 hr) | Some luster |
| | Milk-white |
| Culture temp. (37°C/45°C) | (+/-) |
| Catalase | (-) |
| Acid/gas production (glucose) | (+/-) |
| O/F test (glucose) | (+/+) |
| growth at pH 9.6 | (+) |
| growth in NaOH (6.5 percent) | (+) |

**Table 9: Sugar fermentation properties of lactic acid bacterium strain AJ110263**

| Sugar fermentation properties | | |
|---|---|---|
| Fermentation (+) | L-arabinose | Albutin |
| | D-xylose | Esculin |
| | Galactose | Salicin |
| | Glucose | Cellobiose |
| | Fructose | Maltose |
| | Mannose | Cane sugar |
| | N-acetyl glucosamine | Gentiobiose |
| | Amygdalin | Gluconate |
| Fermentation (-) | Glycerol | Trehalose |
| | Erythritol | Inulin |
| | D-arabinose | Melezitose |
| | Ribose | Raffinose |
| | L-xylose | Starch |
| | Adonitol | Glucogen |
| | β-Methyl-D-xylose | Xylitol |
| | Sorbose | D-Thranose |
| | Rhamnose | D-Lyxose |
| | Dulcitol | D-Tagatase |
| | Inositol | D-Fucose |
| | Mannitol | L-Fucose |
| | Sorbitol | D-Arabitol |
| | α-Methyl-D-mannose | L-Arabitol |
| | α-Methyl-D-glucose | 2-Ketogluconic acid |
| | Lactose | 5-Ketogluconic acid |
| | Melibiose | |

The present invention is described through embodiments below. However, the present invention is not limited thereto.

<Example 1>

The lactic acid bacterium *Weissella sp.* AJ110263 (FERM BP-10474), isolated from fermented milk matsoon, and the lactic acid bacteria Pediococcus pentosaceus JCM5885, *Pediococcus pentosaceus* JCM5890, *Lactobacillus plantarum* JCM 1149, and *Lactobacillus salivarius* JCM1231, obtained from type cultures, were precultured and cultured on MRS liquid medium (Table 1 above). The culture temperature was 30°C for *Weissella sp.* and 37°C for the other strains. The above lactic acid bacteria were inoculated onto and cultured for 24 hours on MRS agar medium plates to which "Umamizyme G", a protease derived from Aspergillus, had been added in quantities of 0 U/mL (none added), 200 U/ML, and 400 U/mL. In culturing, 100 mL of MRS medium was added to a 500 mL Sakaguchi flask, 100 mL of the above culture solution was inoculated, and the medium was shaken 100 times/min.

Next, *Lactobacillus sakei* strain JCM 1157, which does not produce bacteriocin, was employed as an indicator strain, and Lactobacilli AOAC medium was layered. These plates were cultured for 24 hours at 30°C, resulting in the formation of growth inhibition zones in the indicator strains (Table 10 below). From these results, each of the strains is shown to be producing protease-resistant bacteriocin.

**Table 10**

| Strain | protease (U/mL) | | |
|---|---|---|---|
| | 0 | 200 | 400 |
| *Weissella sp.* AJ 110263 | 7 | 10 | 10 |
| *Pediococcus pentosaceus* JCM5885 | 15 | 15 | 15 |
| *Pediococcus pentosaceus* JCM5890 | 10 | 12 | 12 |
| *Lactobacillus plantarum* JCM1149 | 15 | 17 | 23 |
| *Lactobacillus salivarius* JCM 1231 | 13 | 18 | 18 |

| | | | |
|---|---|---|---|
| *Lactobacillus sakei* JCM 1157 was employed as indicator strain. The values in the table indicate the diameters of the growth inhibition zones. | | | |

<Example 2>

*Lactococcus lactis* NCD0497 (a bacterium producing nisin A) and *Lactococcus lactis* NCIMB702054 (a bacterium producing nisin Z) were separately cultured in MRS liquid medium at 30°C. In the same manner as in Example 1; antibiotic evaluation was conducted using *Lactobacillus sakei* strain JCM 1157 as an indicator strain. Instead of nisin-producing bacterial strains, 10 µL of "nisin A 1,000 IU/mL solution" made by ICN Biomedical was spotted on MRS agar medium plates and the above antibiotic evaluation was conducted (without using bacterial strains).

Although indicator strains growth inhibition zones formed in the absence of protease, antibiotic activity due to nisin decreased as the protease concentration rose (see Table 11).

**Table 11**

| Strain | protease (U/mL) | | |
|---|---|---|---|
| | 0 | 200 | 400 |
| Nisin A added (not containing any bacteria producing bacteriocin) | 30 | ND | ND |
| *Lactococcus lactis* NCD0497 (a bacterium producing nisin A) | 30 | 13 | ND |
| *Lactococcus lactis* NCIMB702054 (a bacterium producing nisin Z) | 30 | 13 | ND |

| | | | |
|---|---|---|---|
| *Lactobacillus sakei* JCM1157 was employed as indicator strain. The values in the table indicate the diameters of the proliferation inhibition zones. ND = not detected | | | |

< Example 3>

*Weissella sp.* AJ110263 (FERM BP-10474), *Pediococcus pentosaceus* JCM5885, *Lactococcus lactis* NCD0497 (a bacterium producing nisin A), and *Lactobacillus sakei* strain JCM 1157 were separately cultured and the culture solutions were centrifugally separated for 10 minutes at 10,000 rpm to obtain culture supernatants. After adding 200 U/mL of "Umamizyme G" to the culture supernatants and conducting protease treatment for 24 hours, the supernatants were filtered through 0.45 µm cellulose acetate ("|Dismic-25cs" made by ADVANTEC) to obtain sterile samples. The spot-on-lawn method was employed to examine the antibiotic spectra. This revealed that *Weissella sp.* AJ110263 (FERM BP-10474) and *Pediococcus pentosaceus* JCM5885 exhibited antibiotic activity even when treated with protease, as opposed to the nisin-producing bacteria culture solution and *Lactobacillus sakei* JCM 1157, which do not produce bacteriocin (see Table 12). It was thus understood that *Weissella sp.* AJ 110263 (FERM BP-10474) and *Pediococcus pentosaceus* JCM5885 produced protease-resistant bacteriocin.

**Table 12**

| \Sample strains | *Weissella sp.* AJ110263 | *Pediococcus pentosaceus* JCM5885 | *Lactococcus lactis* NCD0497 | *Lactobacillus sakei* JCM1157T |
|---|---|---|---|---|
| Indicator strains\ | | | | |
| *Listeria innocua* ATCC33090T | 50 | 50 | ND | ND |
| *Bacillus circulans* JCM2504T | 100 | 100 | 50 | 50 |
| *Bacillus coagulans* JCM2257 | 50 | 100 | ND | ND |
| *Micrococcus lutens* IFO 12708 | 100 | 100 | ND | ND |
| *Bacillus subtilis* JCM1465T | 100 | 100 | ND | 50 |
| *Lactococcus lactis* subsp. Lactis ATCC19435 | 50 | 50 | ND | ND |
| *Enterococcus faecium* JCM5804T | 50 | 100 | ND | ND |
| *Enterococcus faecalis* JCM5809T | 100 | 100 | ND | 50 |
| *Lactobacillus plantarum* ATCC14917T | 100 | 100 | ND | 50 |
| *Lactobacillus sakei* JCM1157T | 50 | 50 | ND | ND |

After treating the culture solution with protease, antibiotic activity was measured by the spot-on-lawn method using the culture supernatant. The values indicated antibiotic activity.

Antibiotic activity (AU/mL) = Maximum dilution ratio at which inhibition circles formed x 1,000/ 10
ND = not detected.

<Example 4>

Culture solutions of the various lactic acid bacteria shown in Table 13-*Weissella sp.* AJ110263 (FERM BP-1 0474), *Pediococcus pentosaceus* JCM5885, *Lactobacillus plantarum* JCM1149, *Lactobacillus salivarius* JCM1231, *Leuconostoc citreum* JCM9698, *Leuconostoc pseudomesenteroides* JCM9696 and JCM11045, *Lactococcus lactis* NCIMB702054 (a bacterium producing nisin Z) - were enzymatically treated in the same manner as in Example 3, and antibiotic activity was measured by the spot-on-lawn method using *Bacillus subtilis* as the indicator strain. In the same manner as in Example 3, "Umamizyme G" was employed. Furthermore, 100 units/mL of a-amylase derived from *Bacillus subtilis* (Wako Junyaku) was added to the culture solutions of the lactic acid bacteria, and reacted for more than an hour at 30°C. Similarly, employing *Bacillus subtilis* IAM 1381 as the indicator strain, antibiotic activity was measured by the spot-on-lawn method to check the effect of α-amylase on antibiotic activity.

As shown in Fig. 13, culture solutions of *Weissella sp.* AJ 110263 (FERM BP-10474), *Weissella cibaria* JCM 12495, *Weissella confusa* JCM 1093, Weissella hellenica JCM 10103, *Weissella kandleri* JCM5817, *Weissella minor* JCM 1168, *Weissella paramesenteroides* JCM9890, *Weissella thailandensis* JCM10694, *Pediococcus pentosaceus* JCM5885, *Lactobacillus plantarum* JCM 1149, *Lactobacillus salvarius* JCM1231, *Lactobacillus pentosus* JCM1558, *Leuconostoc citreum* JCM9698, *Leuconostoc pseudomesenteroides* JCM9696 and JCM11045, *Leuconostoc argentinum* JCM11052, *Leuconostoc carnosum* JCM9695, and *Leuconostoc mesenteroides* JCM6124 exhibited antibiotic activity even when treated with protease. Thus, each of these strains was determined to produce protease-resistant bacteriocin. It was confirmed that the antibiotic activity of these culture solutions decreased when treated with α-amylase. The residual activity of Table 13 was calculated as follows: Antibiotic activity (AU/mL) = maximum dilution ratio at which inhibition zones formed x 1,000/10 x (inhibition circle diameter of enzyme treatment sample/diameter of inhibition circle of control).

**Table 13**

| Strain | Residual antibiotic activity | | |
|---|---|---|---|
| | Control | Umamizyme | α-Amylase |
| Nisin producer | | | |
| *Lactococcus lactis* NCIM8702054 | 100 | nd | 100 |

| PRB producers | | | |
|---|---|---|---|
| *Weissella sp.* AJ110263 | 100 | 100 | 30 |
| *Weissella cibaria* JCM 12495 | 100 | 100 | 30 |
| *Weissella confusa* JCM1093 | 100 | 70 | 50 |
| *Weissella hellenica* JCM 10103 | 100 | 100 | 40 |
| *Weissella kandleri* JCM5817 | 100 | 100 | 40 |
| *Weissella minor* JCM1168 | 100 | 100 | 40 |
| *Weissella paramesenteroides* JCM9890 | 100 | 100 | 70 |
| *Weissella thailandensis* JCM10694 | 100 | 100 | 40 |
| *Pediococcus pentosaceus* JCM5885 | 100 | 90 | 30 |
| *Lactobacillus plantarum* JCM1149 | 100 | 80 | 30 |
| *Lactobacillus salivarius* JCM1231 | 100 | 80 | 30 |
| *Lactobacillus pentosus* IAM1558 | 100 | 100 | 30 |
| *Leuconostoc citreum* JCM9698 | 100 | 80 | 40 |
| *Leuconostoc pseudomesenteroides* JCM9696 | 100 | 100 | 50 |
| *Leuconostoc pseudomesenteroides* JCM11045 | 100 | 100 | 50 |
| *Leuconostoc argentinum* JCM 11052 | 100 | 100 | nd |
| *Leuconostoc carnosum* JCM 9695 | 100 | 100 | 30 |
| *Leuconostoc mesenteroides* JCM6124 | 100 | 100 | 40 |

<Example 5: Evaluation of antibiotic activity following treatment with artificial gastric and intestinal juices>

(a) Culturing of lactic acid bacteria

*Lactococcus lactis* NCIMB8780 (a strain producing nisin A), *Lactococcus lactis* NCIMB702054 (a strain producing nisin Z), *Weissella sp.* AJ110263 (a strain producing PRB), *Lactobacillus salivarius* JCM1231 (a strain producing PRB), and *Lactobacillus plantarum* ATCC14917 (indicator strain) were cultured at 30°C and *Lactobacillus gasser* JCM 1131 (a strain not producing bacteriocin) and *Pediococcus pentosaceus* JCM5885 (a strain producing PRB) were statically cultured at 37°C in MRS medium for 24 hours.

(b) Treatment with artificial gastric and intestinal juices

After adding 0.2 percent NaCl and 0.2 percent pepsin (1:5,000) to the culture solution of the lactic acid bacterium so to adjust the pH to 2, the culture solution was treated with protease for two hours at 41°C (artificial gastric juice treatment). After adding 0.2 percent trypsin (1:5,000) to adjust the pH to 6, the culture solution was treated with protease for two hours at 41°C (artificial intestinal juice treatment). In the course of these treatments, lactic acid and caustic soda were employed as pH adjusting agents.

The above digestive enzyme treatment was conducted to prepare the following samples: a culture solution (broth A) containing the bacterial mass of the lactic acid bacteria cultured in MRS, a sterile supernatant (sup. A) obtained by centrifugally separating broth A for 10 min at 10,000 rpm and passing it through a 0.45 µm cellulose acetate filter ("Dismic-25cs" made by ADVANTEC), a digestive enzyme treatment solution (broth B), and a sterile supernatant of broth B (sup. B).

(c) Antibiotic activity test

*Lactobacillus plantarum* ATCC14917, unaffected by lactic acid, was employed as an indicator strain. A 50 µL quantity of this bacterium was plated on a "GAM" agar plate (Nissui Pharmaceutical Co., Ltd.). The surface of this plate was dried well, after which it was spotted with 10 µL spots of the samples prepared in paragraph (b) above and cultured for 24 hours at 30°C. The formation of growth inhibition zones was confirmed, The results arc given in Table 14 below. The numbers in the table indicate the diameter (mm) of the growth inhibition zones. When subjected to artificial gastric and intestinal juice treatment, nisin lost its antibiotic activity while the protease-resistant bacteriocin retained its antibiotic activity.

**Table 14**

| Strains | Antibiotic substance | Control | | Pepsin + Trypsin | |
|---|---|---|---|---|---|
| | | broth A | sup. A | broth B | sup B |
| *Lactobacillus gasseri* JCM 1131 (type strain) | (lac) | nd | nd | nd | nd |
| *Lactococcus lactis* NCIMB8780 | Nisin A | 16 | 15 | nd | nd |
| *Lactococcus lactis* NCIMB702054 | Nisin Z | 15 | 10 | nd | nd |
| *Weissella sp.* AJ110263 | PRB | 10 | 7 | 7 | 7 |
| *Pediococus pentosaceus* JCM5885 | PRB | 5 | 5 | 3 | 3 |
| *Lactobacillus salivarius* JCM1231 | PRB | 5 | 5 | 3 | 3 |

| | | | | | |
|---|---|---|---|---|---|
| nd=not detected | | | | | |

<Example 6: Salmonella proliferation inhibition test (live bacteria count evaluation)>

(a) Sample preparation

The methods set forth in (a) and (b) of Example 5 were employed to cultivate lactic acid bacteria, conduct artificial gastric and intestinal juice treatments, and prepare sterile supernatant samples.

[0070] (b) Salmonella growth inhibition test (live bacteria count evaluation)

*Salmonella enteritidis* NBRC3313 precultured with trypticase soybean casein (made by BBL) was suspended to 10⁵ bacteria/mL in TSBYE medium. A 10 percent quantity of lactic acid bacterium culture supernatant was added and the inhibitory effect on the proliferation of the Salmonella was evaluated. Compared to the non-addition system and the culture supernatant of bacteria not producing bacteriocin, the supernatant of the protease-resistant bacteriocin-producing bacteria markedly inhibited the proliferation of Salmonella. See Table 15.

**Table 15**

| Strains | Antibiotic substance | cfu/ml | | |
|---|---|---|---|---|
| | | CT (0 hr) × 10⁴ | CT (6 hr) × 10⁸ | CT (24 hr) × 10⁸ |
| Control | - | 3.0 | 4.5 | 8.7 |
| *Lactobacillus gasseri* JCM1131 | Lac | 7.5 | 3.3 | 7.9 |
| *Lactacoccus lactis* NCIMB8780 | nisin A | 4.3 | 2.8 | 3.0 |
| *Weissella sp.* AJ110263 | PRB | 4.3 | 3.3 | 1.6 |

<Example 7: The bactericidal effect on Salmonella in feed>

(a) Culturing of lactic acid bacteria

*Weissella sp.* AJ 110263 (a bacterium producing PRB) was cultured for 24 hours at 30°C in MRS medium to which 0.1 percent L-Cys and 0.1 percent L-Met had been added. The culture solution was employed in the following tests as a protease-resistant bacteriocin-containing solution.

(b) Preparation of feed artificially contaminated with Salmonella

*Salmonella enteritidis* (SE) strain KTE-61 (resistant to rifampicin) was cultured for 24 hours at 37°C in brain heart infusion medium (Difco). A 300 mL quantity of this culture solution (live bacteria count of 10⁹ cfu/mL) was added to 6 kg of commercial feed blend (commercial broiler nonchemical feed "BroAce F2") and mixed in a mixer to prepare SE-contaminated feed.

(c) Addition of antibiotic

A total of four segments in the form of a segment obtained by adding 0.2 percent of commercial antibiotic "Bio-Add" (0.2 percent formic acid + propionic acid) to the artificially contaminated Salmonella feed prepared in paragraph (b), a segment obtained by adding 2 percent of a protease-resistant bacteriocin-containing solution to the same, and a no-antibiotic-added segment (control) were separately prepared.

(d) Antibiotic evaluation

Over time, each segment of feed was sampled and diluted with phosphate buffer solution to measure the live bacteria count. For the live bacteria count, the diluted solution was smeared on MLCB agar medium (Nissui Pharmaceutical Co., Ltd.) to which 0.1 mg/mL of rifampicin had been added and cultured for 24 hours at 37°C. As indicated by Fig. 1 below, the PRB-containing solution of lactic acid bacteria exhibited immediate, continuous, stable, and good bactericidal results on Salmonella in feed. After 30 hours, an antibiotic effect exceeding that of the commercial antibiotic Bio-Add was maintained.

<Example 8: Campylobacter proliferation inhibition test (live bacteria count evaluation>

(a) Sample preparation

Lactic acid bacteria were cultured and filtered by the method set forth in (a) of Example 5 to prepare a sterile supernatant.

(b) Campylobacter proliferation inhibition test (live bacteria count evaluation)

Precultured *Campylobacter jejuni* strain 702 was suspended to 10⁶ cells/mL in Brucella medium and 1 percent of the culture supernatant of lactic acid bacteria was added. The Campylobacter live bacteria count was made using CCDA medium. Compared to the non-addition system (control), the PRB-producing bacterial supernatant markedly inhibited the proliferation of Campylobacter, as shown in Table 16.

**Table 16**

| Strains | Antibiotic | Campylobacter jejuni | | |
|---|---|---|---|---|
| | substance | 0hr | 6hr | 24hr |
| Control | - | 5.7×10⁶ | 6.3×10⁶ | 2.3×10⁸ |
| *Weissella sp.* AJ110263 | PRB | 4.1×10⁶ | 2.6×10⁶ | 2.7×10⁴ |
| *Pediococcus pentosaceus* JCM5885 | PRB | 5.1×10⁶ | 4.9×10⁶ | n.d.×10⁰ |
| *Lactobacillus salivarius* JCM1231 | PRB | 5.3×10⁶ | 4.1×10⁶ | n.d.×10⁰ |

| | | | | |
|---|---|---|---|---|
| n.d.=not detected | | | | |

## Claims

1. An antibiotic comprising a protease-resistant bacteriocin isolated from a lactic acid bacterium.

2. A composition comprising the antibiotic of claim 1 and one or more suitable excipients.

3. The composition of claim 2, wherein said composition is formulated for administration to livestock.

4. A composition comprising a lactic acid bacterium belonging to a genus selected from the group consisting of Lactobacillus, Weissella, Pediococcus, Leuconostoc, and combinations thereof.

5. The composition of claim 4, wherein said lactic acid bacterium is selected from the group consisting of *Lactobacillus plantarum, Lactobacillus salivarius, Lactobacillus pentosus, Weissella sp.* FERM BP-10474, *Weissella cibaria, Weissella confusa, Weissella hellenica, Weissella kandleri, Weissella minor, Weissella paramesenteroides, Weissella thailandensis, Pediococcus pentosaceus, Leuconostoc citreum, Leuconostoc pseudomesenteroides, Leuconostoc argentinum, Leuconostoc carnosum, Leuconostoc mesenteroides,* and combinations thereof.

6. A feed composition comprising the antibiotic of claim 1.

7. A feed composition comprising the composition of claim 4.

8. Use of an antibiotic according to claim 1 for the preparation of a pharmaceutical composition for the prevention of the growth of bacteria responsible for human food poisoning in the stomach and/or intestines of livestock.

9. Use of a lactic acid bacterium belonging to a genus selected from the group consisting of the genera Lactobacillus, Weissella, Pediococcus, Leuconostoc and combinations thereof for the preparation of a pharmaceutical composition for preventing the growth of bacteria responsible for human food poisoning in the stomach and/or intestines of livestock.

10. The use according to claim 8 or 9, wherein said bacteria responsible for human food poisoning in the stomach and/or intestines of livestock are of the genus selected from the group consisting of Salmonella, Campylobacter, Listeria, Escherichia coli, Welsh and combinations thereof.
